# EUROPÄISCHE PATENTSCHRIFT

(11) **EP 1 678 962 B1**
(45) Veröffentlichungstag und Bekanntmachung des Hinweises auf die Patenterteilung: **05.11.2008**
(21) Anmeldenummer: 04787087.8
(22) Anmeldetag: 02.09.2004
(51) Int. Cl.: H04Q 7/22

(54) **VERFAHREN ZUM ÜBERTRAGEN VON VERSCHLÜSSELTEN NUTZDATENOBJEKTEN**
METHOD FOR TRANSMITTING ENCRYPTED USEFUL DATA OBJECTS
PROCEDE DE TRANSMISSION D'OBJETS DE DONNEES UTILES CRYPTES

(30) Priorität: 27.10.2003 DE 10350083
(43) Veröffentlichungstag der Anmeldung: 12.07.2006
(73) Patentinhaber: SIEMENS AKTIENGESELLSCHAFT, 80333 München (DE)
(72) Erfinder: TRAUBERG, Markus, 38159 Velchede (DE); SCHMIDT, Andreas, 38124 Braunschweig (DE)
(86) Internationale Anmeldenummer: PCT/EP2004/052002
(87) Internationale Veröffentlichungsnummer: WO 2005/043942

(56) Entgegenhaltungen:
- WO-A-02/43414
- WO-A-03/040898
- "Mobile Digital Rights Management - White Paper" SONERA MEDIALAB, [Online] 6. August 2003 (2003-08-06), Seiten 1-11, XP002314270 Gefunden im Internet: URL:http://www.medialab.sonera.fi/workspac e/MobileDRMWhitePaper.pdf> [gefunden am 2005-01-18]
- NUNO CARVALHO, PAULO GERMANO, LUIS MOURA SILVA: "PAMM Platform: A DRM Solution for MMS Content" THE SECOND INTERNATIONAL CONFERENCE ON MOBILE BUSINESS, [Online] 24. Juni 2003 (2003-06-24), Seiten 1-14, XP002314271 VIENNA, AUSTRIA Gefunden im Internet: URL:http://www.mbusiness2003.org/resources /Papers/00058.doc> [gefunden am 2005-01-18]

## Beschreibung

Die vorliegende Erfindung betrifft ein Verfahren zum Übertragen von verschlüsselten Nutzdatenobjekten auf ein Telekommunikationsendgerät, wie beispielsweise ein Mobiltelefon. Insbesondere betrifft die vorliegende Erfindung ein Verfahren, durch das verschlüsselte Nutzdatenobjekte in effizienter Weise an das Telekommunikationsendgerät übertragen werden können, ohne dass überflüssige bzw. überflüssig hohe Gebühren für den Benutzer des Telekommunikationsendgerät anfallen.

Es wird derzeit ein Verfahren bzw. Dienst zum zuverlässigen und abrechenbaren Übertragen von Nutzdatenobjekten auf ein Telekommunikationsendgerät, insbesondere in der Ausführung eines Mobilfunkgeräts oder Mobiltelefons, in einem Telekommunikationsnetz diskutiert. Dabei soll das Übertragen oder auch Herunterladen der Nutzdatenobjekte zu dem Mobilfunkgerät mittels eines von der Open Mobile Alliance (OMA) spezifizierten Protokolls oder einem Internet-Protokoll (z.B. Hypertext Transfer Protocol: http) erfolgen. Ein Dienst zum Übertragen kann dabei derart spezifiziert sein, dass einem Benutzer mit einem auf dem Mobilfunkgerät verfügbaren Anwendungsprogramm, das als ein Übertragungsklient oder im Fall eines reinen Herunterladens von Daten als ein Herunterlad-Klient bezeichnet werden kann, das Übertragen von beliebigen Nutzdatenobjekten ermöglicht werden soll, die von einer oder mehreren Datenbereitstellungskomponenten, insbesondere Servern von Dienstanbietern oder Inhaltanbietern, im Datenkommunikationsnetz angeboten werden.

Das WAP-Forum bzw. dessen Nachfolgeorganisation Open Mobile Alliance (OMA) hat dabei verschiedene Verfahren zur Verwaltung expliziter Nutzungsrechte für digitale Inhalte beliebiger Art, wie beispielsweise auch multimedialer Daten, definiert. Dabei ist vorgesehen, ein zu übertragendes Nutzdatenobjekt mit Restriktionen bzw. Beschränkungen bezüglich der Nutzung durch den Empfänger bzw. Benutzer des Mobilfunkgeräts zu versehen. Beispielsweise kann damit die Anzahl der Benutzungen des Nutzdatenobjekts oder auch die Benutzungsdauer eingeschränkt werden. Die praktische Umsetzung erfolgt durch die Beschreibung der Restriktionen mit einer entsprechenden Sprache, wie beispielsweise der ODRL (Open Digital Rights Language) oder der von der OMA spezifizierten OMA DRM, wobei der Übertragungs-Klient oder eine andere spezielle Anwendung, ein sogenannter DRM-Agent, zur Verwaltung der mit einem (digitalen) Nutzdatenobjekt verknüpften Rechte (DRM: Digital Rights Management) die Rechtebeschreibung empfängt, auswertet, in einem geschützten, dem Benutzer nicht zugänglichen Speicherbereich auf dem Mobilfunkgerät ablegt und die Rechte bei einer Anfrage des Benutzers, das Objekt zu nutzen, entsprechend der Rechtebeschreibung gewährt oder nicht. Das Nutzdatenobjekt selbst kann vor unautorisiertem Zugriff entweder dadurch geschützt werden, dass es verschlüsselt in einem frei zugänglichen Speicherbereich auf dem Mobilfunkgerät abgelegt wird, oder dass es von einer speziellen Anwendung, beispielsweise dem DRM-Agenten, verwaltet wird, die keinen unautorisierten Zugriff auf das Objekt durch den Benutzer zulässt.

Gemäß einer von der Open Mobile Alliance spezifizierten Variante, der sogenannten "Separate-Delivery" (getrennte Übersendung), für die Verwaltung von DRM-geschützten Inhalten wird ein von einer Datenbereitstellungskomponente bereitgestelltes Nutzdatenobjekt verschlüsselt und zum Transport und zur Speicherung auf ein Telekommunikationsendgerät, wie einem Mobilfunkgerät, in einer sogenannten Container-Datei bzw. einem sogenannten Container-Objekt verpackt (der beispielsweise den Datentyp oder Content-Typ "Application/VND.OMA.DRM.Content" zugewiesen bekommen hat). Mit einem Dienst zum zuverlässigen Übertragen von Inhalten von einer Datenbereitstellungskomponente (Content Download) wird das verschlüsselte Nutzdatenobjekt in dem Container-Objekt verpackt mittels WAP-Protokollen (wie beispielsweise dem WSP: Wireless Session Protocol) oder Internet-Protokollen (wie beispielsweise dem http) auf das Telekommunikationsendgerät übertragen. Separat vom verschlüsselten Nutzdatenobjekt wird ein sogenanntes Rechteobjekt über einen sicheren Kanal auf das Telekommunikationsendgerät, beispielsweise automatisch mittels WAP-Push, übertragen. Das Rechteobjekt enthält eine Beschreibung der Rechte, die dem Benutzer zur Nutzung des verschlüsselten Nutzdatenobjekts gewährt werden, eine Referenz auf das Container-Objekt, die eine Zuordnung des Rechteobjekts zum entsprechenden Container-Objekt ermöglicht, und einen Schlüssel, mit dem das verschlüsselte Nutzdatenobjekt entschlüsselt werden kann, um es anschließend zu nutzen. Auf dem Telekommunikationsendgerät, wie dem Mobilfunkgerät, ist zur Nutzung der Kombination aus dem in dem Container-Objekt gepackten, verschlüsselten Nutzdatenobjekt und dem Rechteobjekt eine spezielle Einrichtung bzw. Anwendung notwendig, die der oben erwähnte DRM-Agent sein kann. Nach dem Übertragen des Rechteobjekts auf die Telekommunikationseinrichtung wird das Rechteobjekt direkt dem DRM-Agenten übergeben, der für die Verwaltung und Wahrung des Geheimnisses, nämlich des Schlüssels zum Entschlüsseln des verschlüsselten Nutzdatenobjekts, verantwortlich ist. Praktisch legt der DRM-Agent das Rechteobjekt vor einem unautorisierten Zugriff durch andere Anwendungen oder Benutzer auf dem Telekommunikationsendgerät geschützt ab. Wenn ein verschlüsseltes Nutzdatenobjekt genutzt werden soll, so wird zunächst der DRM-Agent aktiviert. Dieser sucht ein zu dem Container-Objekt passendes Rechteobjekt in dem von ihm verwalteten Speicherbereich in der Telekommunikationseinrichtung anhand der im Container-Objekt und auch im Rechteobjekt enthaltenen Identifikation, überprüft, ob für die angefragte Nutzungsart (wie beispielsweise ein "Abspielen" von Musikdaten oder ein "Anzeigen" von Bilddaten, usw.) Rechte gewährt werden können und entschlüsselt das Nutzdatenobjekt mit dem Schlüssel aus dem Rechteobjekt, falls die Rechte gewährt werden können. Mit dem oben beschriebenen Verfahren, bei dem ein verschlüsseltes Nutzdatenobjekt und ein von diesem separates Rechteobjekt verwendet werden können, wird der Wert digitaler Daten nicht mehr durch das (verschlüsselte) Nutzdatenobjekt oder das Container-Objekt selbst, sondern vielmehr durch das Rechteobjekt und dem darin enthaltenen Schlüssel dargestellt, ohne den ja das verschlüsselte Nutzdatenobjekt nicht nutzbar ist. Somit können in diesem Fall die verschlüsselten Nutzdatenobjekte verpackt in den Container-Objekten frei zugänglich auf dem Telekommunikationsendgerät gespeichert werden.

Da es sich, wie bereits erwähnt, bei den zu übertragenden (verschlüsselten) Nutzdatenobjekten um Datenobjekte mit multimedialen Inhalten und somit Daten mit großem Umfang handeln kann, ist für eine entsprechende Übertragung derartiger Daten ein Dienst mit großer Übertragungskapazität erforderlich. Beispielsweise ist der von der 3GPP (3rd Generation Partnership Project) und von der OMA spezifizierte Multimedia Messaging Service (MMS) in der Lage, eine Vermittlung und Übertragung von multimedialen Nachrichten zu und von Mobilkommunikationsteilnehmern durchzuführen.

Das Dokument WO 02/43414 A2 beschreibt eine Möglichkeit der Implementierung von Streaming in MMS. Es soll eine Multimedia-Nachricht von UA A (user agent) zu UA B gesendet werden. Über den MMS Relay A gelangt die Multimedia-Nachricht zu dem MMS Relay B, welcher die Multimedia-Nachricht speichert. Der MMS Relay B kennt den Inhalt der Multimedia-Nachricht. Weiterhin kennt MMS Relay B die Fähigkeiten von UA B. Demgemäß kann der MMS Relay B ermitteln, ob bzw. in welcher Form die Multimedia-Nachricht dem UA B per Streaming zur Verfügung gestellt werden kann.

Das Dokument WO 03/040898 A1 beschreibt die Durchsetzung von Schutzmaßnahmen von Inhalten bei einer Übertragung der Inhalte über MMS. Zuerst werden hierzu die Inhalte mit den Schutz-policies versehen. Empfängt ein MMS-C eine Nachricht, wird gesucht, ob eine Schutz-policy enthalten ist. Trifft dies zu, wird geprüft, ob der Empfänger die Nachricht gemäß der Schutz-policy erhalten darf. Hierzu werden Informationen über die Berechtigung des Empfängers mit der Schutz-policy der Nachricht verglichen.

Eine Kombination beider Techniken DRM und MMS ist somit sinnvoll. Mit MMS können wertvolle digitale Inhalte zu anderen Teilnehmern übertragen werden, wobei die konkreten Nutzungsrechte für die Inhalte definiert und ebenfalls übermittelt werden können. Die Inhalte werden dazu in den DRM-Container-Objekten gepackt und optional verschlüsselt (abhängig vom gewählten DRM-Verfahren). Damit kann die Nutzung der Inhalte auf den/die adressierten Empfänger der MMS-Nachricht eingeschränkt werden und z.B. einer unerwünschten Weiterverbreitung durch einfaches Weiterleiten einer Nachricht durch den ersten Empfänger vorgebeugt werden. Eine weitere Möglichkeit ist die Weiterleitung des verschlüsselten Inhalts durch einen ersten MMS-Empfänger an einen zweiten MMS-Empfänger, was als Superdistribution bezeichnet wird. Unabhängig vom Transport des verschlüsselten Inhalts müssen dabei beide Empfänger separat Rechte vom Rechteanbieter erhalten, um den verschlüsselten Inhalt entschlüsseln und nutzen zu können.

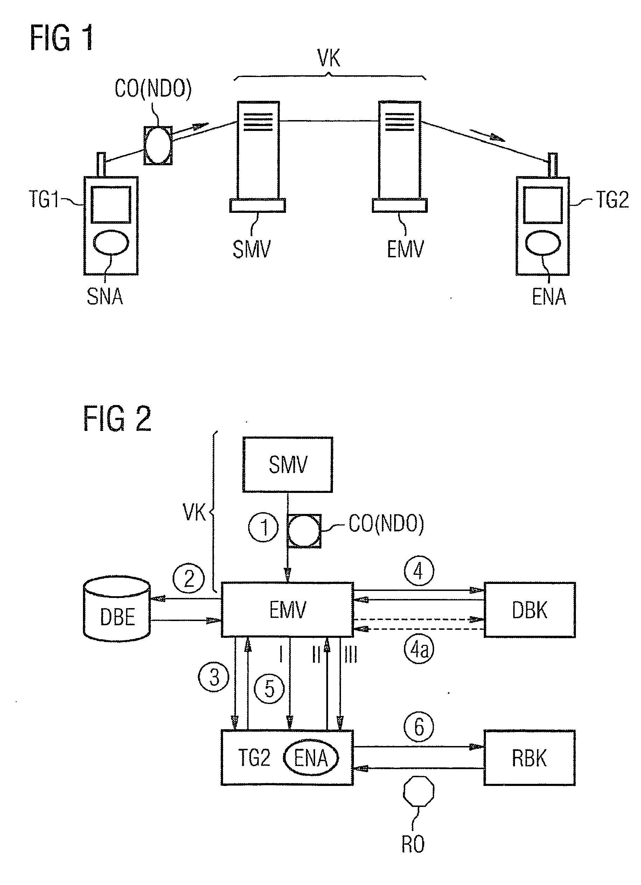

Die Weiterleitung (Superdistribution) von verschlüsselten, in einem DRM-geschützten Container-Objekt CO enthaltenen Inhalten NDO von einem ersten MMS-Empfänger (hier der Sender) TG1 mit einer sendenden MMS-Nutzerapplikation SNA zu einem zweiten MMS-Empfänger TG2 mit einer empfangenden MMS-Nutzerapplikation ENA über eine MMS-Vermittlungskomponente VK bestehend aus einer senderseitigen MMS-Vermittlungseinheit SMV und einer empfängerseitige MMS-Vermittlungseinheit EMV, wie in Abb. 1 dargestellt, ist von den Anbietern durchaus erwünscht, da über diesen Mechanismus die Inhalte unter den Nutzern verbreitet werden und sich jeder Nutzer individuell ein Rechteobjekt herunterladen muss, wenn er Zugriff auf den DRM-geschützten Inhalt erhalten will. Das Herunterladen eines Rechteobjekts von einem Server eines Rechteanbieters durch einen Teilnehmer nach Erhalt des DRM-geschützten Inhalts per MMS kann vom Anbieter vergebührt werden. Es kann also zusätzlicher Umsatz generiert werden.

Dabei tritt allerdings das Problem auf, dass der geschützte Inhalt verschlüsselt ist und die MMS-Vermittlungseinheiten keinen Zugriff auf den Inhalt haben. Insbesondere die sonst mögliche und häufig praktizierte Anpassung des Inhalts einer Multimedianachricht an die Eigenschaften bzw. Möglichkeiten bezüglich der Verarbeitung der empfangenden MMS-Nutzerapplikation ENA und des Endgerätes, auf dem diese ausgeführt wird, ist damit nicht möglich. Es besteht die erhöhte Gefahr, dass ein DRM-geschützter Inhalt, der in einer Multimedianachricht unverändert und unkontrolliert die empfängerseitige MMS-Vermittlungseinheit EMV zum empfangenden Endgerät verlässt, auf diesem nicht nutzbar ist. Das ist umso kritischer wenn der Benutzer des empfangenden Endgeräts sich ein zu dem Inhaltsobjekt passendes Rechteobjekt gegen eine Gebühr auf sein mobiles Endgerät herunterlädt und erst nach dem Herunterladen und der damit verbundenen Abrechnung feststellt, dass die Inhalte für das Endgerät nicht geeignet sind bzw. nicht oder nur mit Einschränkungen genutzt werden können.

Es ist somit die Aufgabe der vorliegenden Erfindung eine Möglichkeit zu schaffen, ein verschlüsseltes Nutzdatenobjekt an ein Telekommunikationsendgerät zu übertragen, wobei die Verarbeitbarkeit bzw. Nutzbarmachung durch das Telekommunikationsendgerät sichergestellt ist.

Diese Aufgabe wird durch die unabhängigen Ansprüche gelöst. Vorteilhafte Ausgestaltungen sind Gegenstand der Unteransprüche.

Dabei umfasst ein Verfahren zum Übertragen von verschlüsselten Nutzdatenobjekten an ein erstes Telekommunikationsendgerät folgende Schritte. Zunächst wird bei einer Vermittlungskomponente eines Telekommunikationsnetzes ein an das erste Telekommunikationsendgerät zu übertragendes verschlüsseltes Nutzdatenobjekt mit einer Referenz bereitgestellt. Dabei kann das verschlüsselte Nutzdatenobjekt zuvor von einer Datenbereitstellungskomponente (eines Inhalteanbieters bzw. Nutzdatenobjekteanbieters) mit einer Referenz versehen worden sein, wobei die Referenz zum Kontaktieren der Datenbereitstellungskomponente (oder eventuell einer anderen bestimmten Datenbereitstellungskomponente) dient. Die Referenz kann zur Erlangung der Beschreibung der Eigenschaften des verschlüsselten Nutzdatenobjekts bzw. zur Anfrage bei der Datenbereitstellungskomponente, die Eignung des Nutzdatenobjekts für ein Telekommunikationsendgerät zu überprüfen, genutzt werden. Insbesondere kann dabei das verschlüsselte Nutzdatenobjekt in einem Container-Objekt, wie einem DRM-Container, enthalten sein, in dem außerdem die Referenz vorgesehen ist. Erhält eine Vermittlungskomponente eines Telekommunikationsnetzes ein verschlüsseltes Nutzdatenobjekt mit einer Referenz zur Übertragung an ein erstes Telekommunikationsendgerät, nutzt diese die Referenz, um die angegebene Datenbereitstellungskomponente zu kontaktieren und die Eignung des Nutzdatenobjektes für das (erste) Telekommunikationsendgerät zu überprüfen. Aufgrund der Verschlüsselung des Nutzdatenobjekts hat die Vermittlungskomponente keinen Zugriff auf dessen Inhalt. Zunächst wird von der Vermittlungskomponente ein Profil bezüglich der Möglichkeiten des ersten Telekommunikationsendgeräts, ein Nutzdatenobjekt zu verarbeiten, ermittelt. Außerdem wird von der Vermittlungskomponente eine Anfrage zusammen mit dem ermittelten Profil des ersten Telekommunikationsendgeräts an eine Datenbereitstellungskomponente (insbesondere des Anbieters der Nutzdatenobjekte) entsprechend einer in der Referenz enthaltenen Adresse übermittelt, um zu prüfen, ob das zu übertragende Nutzdatenobjekt von dem ersten Telekommunikationsendgerät verarbeitbar ist. Anschließend wird von der Datenbereitstellungskomponente eine Information über die Prüfung der Vermittlungskomponente mitgeteilt und wird von der Vermittlungskomponente ein verschlüsseltes Nutzdatenobjekt entsprechend der Information über die Prüfung bereitgestellt und darüber das erste Telekommunikationsendgerät benachrichtigt.

Das dargestellte Verfahren zum Übertragen von verschlüsselten Nutzdatenobjekten erfolgt gemäß einer vorteilhaften Ausgestaltung gemäß dem Multimedia Messaging Service (MMS). Dadurch wird eine Übertragung von (verschlüsselten) Nutzdatenobjekten ermöglicht, die auch multimediale Inhalte mit großem Datenumfang, wie digitale Fotos oder Video-Clips, umfassen können.

Gemäß einer vorteilhaften Ausgestaltung kann dann das Verfahren zum Übertragen von verschlüsselten Nutzdatenobjekten wie folgt aussehen.
1. Ein Anbieter von Inhalten bzw. von Nutzdatenobjekte integriert bei der Generierung eines verschlüsselten Nutzdatenobjekts in ein Container-Objekt für das DRM-geschützte Nutzdatenobjekt eine zusätzliche Referenz zur Nutzung durch eine Vermittlungskomponente eines Telekommunikationsnetzes, insbesondere eine MMS-Vermittlungseinheit, für die nachfolgend beschriebene, Funktionalität.
2. Es wird davon ausgegangen, dass ein Benutzer eines weiteren Telekommunikationsendgeräts ein oben beschriebenes verschlüsseltes bzw. in einem Container-Objekt vorgesehenes Nutzdatenobjekt über die Vermittlungskomponente an das oben erwähnte erste Telekommunikationsendgerät übermitteln möchte. Dazu wird das zu übermittelnde verschlüsselte Nutzdatenobjekt zunächst an die Vermittlungskomponente gesendet, und liegt dort nun zur weiteren Verarbeitung vor. Die Vermittlungskomponente, die insbesondere im Rahmen des MMS eine empfängerseitige MMS-Vermittlungseinheit aufweist, welche dem ersten Telekommunikationsendgerät zugeordnet ist, an das das verschlüsselte Nutzdatenobjekt übertragen werden soll, überprüft den Inhalt des Nutzdatenobjekts für die Zustellung zu einer empfangenden Nutzerapplikation auf dem empfangenden Telekommunikationsendgerät. Die Zustellung des verschlüsselten Nutzdatenobjekts soll dabei mittels einer Zustellnachricht, insbesondere mittels einer Multimedianachricht (MM) im Rahmen des MMS erfolgen, welche zu präparieren ist.
3. Die Vermittlungskomponente (empfängerseitige MMS-Vermittlungseinheit) analysiert die Zustellnachricht (MM) bezüglich enthaltener verschlüsselter Nutzdatenobjekte bzw. DRM-Container-Objekte (mit Nutzdatenobjekten) und einer jeweiligen Existenz einer Signalisierungsinformation bzw. Referenz, wie es unter Punkt 1. erläutert worden ist. Die Referenz kann dabei eine Adresse beispielsweise in Form eines U-niform Resource Locator (URL) aufweisen. Diese Referenz bzw. Adresse wird von dem DRM-Container-Objekt (verschlüsselten Nutzdatenobjekt) extrahiert, falls sie vorhanden ist.
4. Die Vermittlungskomponente (empfängerseitige MMS-Vermittlungseinheit) ermittelt die Eigenschaften bzw. Möglichkeiten des ersten (empfangenden) Telekommunikationsendgeräts, auf dem die empfangende MMS-Nutzerapplikation ausgeführt wird. Dies kann entweder durch eine Abfrage einer Datenbank im Bereich der Vermittlungskomponente (empfängerseitige MMS-Vermittlungseinheit) oder einer weiteren Komponente des Telekommunikationsnetzes des Netzbetreibers, dem der Benutzer des ersten Telekommunikationsendgeräts insbesondere als Kunde zugeordnet ist, erfolgen. Alternativ kann die Vermittlungskomponente (empfängerseitige MMS-Vermittlungseinheit) einen direkten Kontakt zum ersten Telekommunikationsendgerät, auf dem die MMS-Nutzerapplikation ausgeführt wird, aufbauen und darüber die Eigenschaften bzw. Möglichkeiten der Verarbeitung von Nutzdatenobjekten des Telekommunikationsendgerätes abfragen.
5. Die Vermittlungskomponente (empfängerseitige MMS-Vermittlungseinheit) fragt über die entsprechende Referenz (URL) in dem DRM-Container bei einer Datenbereitstellungskomponente des Inhalteanbieters an, ob der verschlüsselte Inhalt bzw. das verschlüsselte Nutzdatenobjekt für das empfangende Endgerät geeignet ist, d.h. auf diesem auch genutzt werden kann. Dabei integriert die Vermittlungskomponente (empfängerseitige MMS-Vermittlungseinheit) in die Anfrage die Profilinformationen bezüglich der Verarbeitungsmöglichkeiten des empfangenden Telekommunikationsendgeräts. Bei der Anfrage kann optional auch der DRM-geschützte Content selbst von der MMS-Vermittlungseinheit zur Datenbereitstellungskomponente übermittelt werden, wodurch ein Inhalteanbieter von der Notwendigkeit entlastet wird, jeden Inhalt bzw. jedes Nutzdatenobjekt dauerhaft bereitzuhalten.
6. Die Datenbereitstellungskomponente analysiert die Anfrage und die darin enthaltenen Profileigenschaften des Telekommunikationsendgeräts (im folgenden Zielendgerät genannt), auf dem der DRM-geschützte Inhalt genutzt werden soll.
7. Die Datenbereitstellungskomponente antwortet anschließend der Vermittlungskomponente (empfängerseitigen MMS-Vermittlungseinheit) mit einer Nachricht umfassend eine Information, die entweder anzeigt, dass der Inhalt für das Zielendgerät geeignet oder dass er nicht geeignet ist. Diese Nachricht enthält optional einen Verweis zum Herunterladen des geeigneten Inhalts bzw. Nutzdatenobjekts von einer Datenbereitstellungskomponente oder den geeigneten Inhalt bzw. das geeignete Nutzdatenobjekt in DRM-geschützter Form selbst. Dies ist insbesondere sinnvoll, wenn der ursprüngliche Inhalt für das Zielendgerät nicht geeignet war.
8. Die Vermittlungskomponente (empfängerseitige MMS-Vermittlungseinheit) berücksichtigt die erhaltene Information angemessen, stellt die Zustellnachricht (insbesondere MM) mit geeigneten Objekten zum Herunterladen durch die MMS-Nutzerapplikation zusammen bzw. bereit und sendet eine Empfängerbenachrichtigung (insbesondere MMS-Empfängerbenachrichtigung gemäß einem herkömmlichen MMS-Verfahren) an das erste Telekommunikationsendgerät, wo die Benachrichtigung von einer entsprechenden Nutzerapplikation (MMS-Nutzerapplikation) verarbeitet wird.
9. Der weitere Verlauf kann auf herkömmliche Weise erfolgen. Die Nutzerapplikation (MMS-Nutzerapplikation) auf dem ersten Telekommunikationsendgerät fordert im Nachgang an die Empfängerbenachrichtigung die Zustellnachricht (MM) von der Vermittlungskomponente (empfängerseitige MMS-Vermittlungseinheit) an. Für die DRM-geschützten Objekte in der Zustellnachricht (MM) kann beispielsweise über einen entsprechenden Browser des ersten Telekommunikationsendgeräts das Angebot eines Rechteanbieters wahrgenommen werden und können ein oder mehrere entsprechende Rechteobjekte - ggf. unabhängig von MMS - von einer Rechtebereitstellungskomponente (Server) des Rechteanbieters auf das erste Telekommunikationsendgerät geladen werden, wodurch dann letztlich ein Zugriff auf und eine Nutzung der DRM-geschützten Inhalte im geeigneten Format auf dem Endgerät möglich wird.

Zusammenfassend ist für die erläuterte Ausgestaltung somit wesentlich die zusätzliche Signalisierung (vom Anbieter von Inhalten bzw. Nutzdatenobjekten) in dem Container für den DRM-geschützten oder verschlüsselten Inhalt, mit der erstens eine Referenz zur Nutzung der oben erläuterten Funktionalität in den Container integriert wird und zweitens die Unterstützung des Anbieters von Inhalten bzw. Nutzdatenobjekten mittels der Datenbereitstellungskomponente für diese zusätzliche Funktionalität signalisiert wird. Ferner wird der Vermittlungskomponente (empfängerseitigen MMS-Vermittlungseinheit) die zusätzliche Funktionalität zugewiesen, DRM-Container bezüglich der oben beschriebenen Signalisierung zu untersuchen und eine entsprechende Kommunikation mit dem Anbieter von Inhalten bzw. Nutzdatenobjekten oder deren Datenbereitstellungskomponente zu initiieren. Außerdem erhält die Vermittlungskomponente (empfängerseitige MMS-Vermittlungseinheit) die zusätzliche Funktionalität, die Eigenschaften bzw. Verarbeitungsmöglichkeiten des Empfänger-Endgerätes zu ermitteln und in die Anfrage an die Datenbereitstellungskomponente zu integrieren. Eine weitere wesentliche Funktionalität erhält die Datenbereitstellungskomponente, nämlich die Eignung des DRM-geschützten Inhalts für das empfangende Telekommunikationsendgerät zu überprüfen und gegebenenfalls einen besser passenden Inhalt bzw. ein geeignetes Nutzdatenobjekt bereitzustellen.

Gemäß einer vorteilhaften Ausgestaltung sind das erste Telekommunikationsendgerät und eventuell weitere Telekommunikationsendgeräte sowie die Vermittlungskomponente Teil eines Telekommunikationsnetzes. Dabei kann das oder die weiteren Telekommunikationsendgeräte Teil eines ersten Telekommunikationsnetzes sein (im Falle mehrerer Telekommunikationsendgeräte müssen diese jedoch nicht Teil desselben Telekommunikationsnetzes sein). Entsprechend kann die Vermittlungskomponente, welche insbesondere als ein Server eines Datenübertragungsdienstes, wie beispielsweise als ein MMS-Relay-Server ausgebildet ist, in einem zweiten Telekommunikationsnetz vorgesehen sein, das mit dem oder den Telekommunikationsnetzen, welche dem oder den weiteren Telekommunikationsendgeräten zugeordnet sind, verbunden ist. Dieses zweite Telekommunikationsnetz kann insbesondere als ein auf Internet-Protokollen, wie dem Hypertext Transfer Protocol, basiertes Telekommunikationsnetz ausgeführt sein. Es ist ferner denkbar, dass die Datenbereitstellungskomponente auch in dem zweiten Telekommunikationsnetz oder in einem weiteren mit diesem verbundenen Telekommunikationsnetz vorgesehen ist.

Um das Verfahren zum Übertragen von Nutzdaten-Objekten möglichst flexibel nutzen zu können, kann das Telekommunikationsendgerät (oder auch die weiteren Telekommunikationsendgeräte) vorzugsweise als ein mobiles Telekommunikationsendgerät ausgebildet sein. Insbesondere ist es denkbar, dass die Daten bzw. Nachrichten zu und von dem ersten oder dem weiteren Telekommunikationsendgerät über eine Luftschnittstelle gesendet werden. Dabei kann das jeweilige Telekommunikationsendgerät ein Funkmodul umfassen. Das Telekommunikationsendgerät kann beispielsweise als ein Mobiltelefon, ein Schnurlostelefon, als ein Smartphone (Kombination aus einem kleinen tragbaren Computer und einem Mobiltelefon), als ein PDA (PDA: Personal Digital Assistant = persönlicher digitaler Assistent) bzw. als ein Organizer ausgebildet sein. Weiterhin kann das Telekommunikationsendgerät auch andere mobil erreichbare Geräte umfassen, wie einen Personal Computer (PC) oder einen Laptop, die mittels eines angeschlossenen Mobilfunkgeräts (Mobiltelefon oder Mobilfunkmodul) über ein Mobilfunknetz erreicht werden können. Das Mobilfunkgerät kann dann beispielsweise über ein Kabel an den Personal Computer bzw. Laptop angeschlossen sein oder auch diese drahtlos über eine Infrarot-Schnittstelle oder ein lokales Bluetooth-Netz kontaktieren. Wie bereits erwähnt, kann die Übertragung von Daten und Nachrichten zu und von dem jeweiligen Telekommunikationsendgerät dann mittels WAP-Protokollen oder dem Hypertext Transfer Protocol (http) erfolgen. Dabei kann ein Telekommunikationsendgerät, wie das Mobilfunkgerät, einschließlich des diesem zugeordneten Telekommunikationsnetzes in der Ausführung eines Mobilfunknetzes gemäß dem GSM (Global System for Mobile Communication)-Standard oder dem UMTS (Universal Mobile Telecommunications System)-Standard usw. arbeiten. Derartige Mobilfunknetze bzw. Telekommunikationseinrichtungen gemäß dem GSM- oder UMTS-Standard können eine Plattform für WAP-Protokolle bzw. den WAP-Protokoll-Stack (WAP: Wireless Application Protocol) darstellen, mittels dem Daten (Mitteilungen bzw. Nutzdaten-Objekte) im jeweiligen Mobilfunknetz übertragbar sind.

Vorteilhafterweise sind das erste und das zweite Telekommunikationsnetz durch eine Verbindungskomponente miteinander verbunden. Im Falle der Verwendung des WAP-Protokoll-Stack, wie oben erwähnt, ist es möglich, durch die Verwendung eines WAP-Gateways als Schnittstelle bzw. Verbindungskomponente zwischen einem Mobilfunknetz und einem anderen Netzwerk; beispielsweise einem auf einem Internet-Protokoll basierenden Netz, eine Verbindung zu diesem zu schaffen. Auf diese Weise ist es möglich, dass sich die Vermittlungskomponenten in einem auf einem Internet-Protokoll basierenden Netzwerk, wie dem Internet, befindet, wobei die Daten (Nachrichten, Nutzdatenobjekte) über ein WAP-Gateway und schließlich über eine Luftschnittstelle eines Mobilfunknetzes zwischen der oder den Basisstationen des Mobilfunknetzes und an die jeweiligen Telekommunikationsendgeräte von Benutzern übertragen werden können. In diesem Zusammenhang sei erwähnt, dass insbesondere im Rahmen des MMS-Datenübertragungsdienstes Nachrichten von einem MMS-Relay-Server als Teil einer Vermittlungskomponente automatisch, d.h. ohne Anforderung eines Telekommunikationsendgeräts, an ein Telekommunikationsendgerät mittels WAP-Push gesendet werden können. Hierbei dient der MMS-Relay-Server als sogenannter Push-Initiator, der das WAP-Gateway bzw. eine Unterkomponente von diesem, nämlich das Push-Proxy-Gateway, dazu veranlasst, eine Nachricht per WAP-Push an das Telekommunikationsendgerät zu senden. Beispielsweise wird gemäß dem MMS-Übertragungsdienst die Empfängerbenachrichtung mittels WAP-Push an das erste Telekommunikationsendgerät übertragen.

Gemäß einer vorteilhaften Ausgestaltung kann es sich bei den Nutzdatenobjekten um Daten in Form von Textdaten, Bilddaten bzw. Videodaten, Audiodaten, ausführbare Programme oder Softwarekomponenten oder eine Kombination dieser Datenarten, d.h. um multimediale Daten bzw. Inhalte, handeln.

Gemäß einem weiteren Aspekt wird eine Telekommunikationsanordnung umfassend eine Vermittlungskomponente, eine Datenbereitstellungskomponente, sowie zumindest ein erstes Telekommunikationsendgerät geschaffen, wobei die Telekommunikationsanordnung dafür ausgelegt ist, ein oben erwähntes Verfahren durchzuführen.

Bevorzugte Ausführungsformen der vorliegenden Erfindung werden nachfolgend bezugnehmend auf die beiliegenden Zeichnungen näher erläutert. Es zeigen:
- Figur 1: ein Blockschaltbild einer herkömmlichen MMS-Architektur zum Übertragen von Nutzdatenobjekten von einem Telekommunikationsendgerät über eine Vermittlungskomponente an weiteres Telekommunikationsendgerät;
- Figur 2: ein Blockschaltbild einer Telekommunikationsanordnung, bei dem der Nachrichtenfluss beim Übertragen eines verschlüsselten Nutzdatenobjekts gemäß einer bevorzugten Ausführungsform der Erfindung darstellt ist;
- Figur 3: eine schematische Darstellung eines Container-Objekts gemäß einer Ausführungsform der Erfindung.

Es sei auf Figur 2 verwiesen, in der ein Nachrichtenfluss zwischen Komponenten einer Telekommunikationsanordnung beim Übertragen eines verschlüsselten Nutzdatenobjekts an ein Telekommunikationsendgerät gemäß einer bevorzugten Ausführungsform der Erfindung dargestellt ist.

Wie es in Figur 2 zu sehen ist, umfasst die Telekommunikationsanordnung zum Durchführen eines Verfahrens zum Übertragen von Nutzdatenobjekten mittels des MMS eine Vermittlungskomponente VK bestehen aus einer senderseitigen MMS-Vermittlungseinheit SMV, die einem sendenden Telekommunikationsendgerät (nicht dargestellt, vgl. aber dazu das Telekommunikationsendgerät TG1 von Figur 1) zugeordnet ist, und einer empfängerseitigen MMS-Vermittlungseinheit EMV, die einem empfangenden Telekommunikationsendgerät TG2 zugeordnet ist. Die beiden Telekommunikationsendgeräte sind dabei beispielsweise als Mobiltelefone ausgebildet, welche nach dem UMTS-Standard arbeiten können. Es sei ferner angenommen, dass das als Mobiltelefon ausgebildete TG2 (wie auch das nicht dargestellte sendende Telekommunikationsendgerät) Teil eines Mobilfunknetzes ist. Das Mobiltelefon TG2 ist in der Lage, WAP-Protokolle (z.B. Wireless Session Protocol: WSP, usw.) bzw. den WAP-Protokoll-Stack zu verwenden, um Daten über eine Luftschnittstelle an eine entsprechende stationäre Sende-/Empfangsanordnung des dem Mobiltelefon TG2 zugeordneten Mobilfunknetzes zu übertragen. Ferner umfasst die Telekommunikationsanordnung eine Datenbank DBE, in der Profile von Telekommunikationsendgeräten bezüglich der Verarbeitungsmöglichkeiten bzw. Verarbeitungseigenschaften von Nutzdatenobjekten gespeichert sind, eine Datenbereitstellungskomponente DBK eines Anbieters von Inhalten bzw. Nutzdatenobjekten, sowie eine Rechtebereitstellungskomponente RBK eines Anbieters von Rechteobjekten zu den jeweiligen Nutzdatenobjekten (der Anbieters von Rechteobjekten und der Anbieter von Nutzdatenobjekt können dabei identisch sein). Dabei können die Datenbank DBE, die Datenbereitstellungskomponente DBK und die Rechtebereitstellungskomponente RBK in dem dem Mobiltelefon TG2 zugeordneten Mobilfunknetz vorgesehen sein oder können beispielsweise im Internet vorgesehen sein, das über entsprechende WAP-Gateways mit dem Mobilfunknetz des Mobiltelefons TG1 verbunden ist.

Es wird entsprechend Figur 1 im folgenden davon ausgegangen, dass auf dem Mobiltelefon TG2 eine MMS-Nutzerapplikation bzw. MMS-Nutzeranwendung ENA vorgesehen ist, über die das Mobiltelefon TG2 mit der MMS-Vermittlungseinheit EMV und der Rechtebereitstellungskomponente RBK kommuniziert.

Im Folgenden soll nun die Signalisierung bzw. der Nachrichtenfluss bei der Übermittlung Zustellung einer Multimedianachricht MM mit DRM-geschütztem Inhalt bzw. Nutzdatenobjekt NDO an die MMS-Nutzerapplikation ENA auf dem Zielendgerät bzw. Mobiltelefon TG2 gemäß einer bevorzugten Ausführungsform der Erfindung erläutert werden. Der Informations- bzw. Nachrichtenfluss wird durch die Pfeile im Blockschaltbild symbolisiert und anhand der zugeordneten Nummern beschrieben:
1. Ein verschlüsseltes Nutzdatenobjekt, d.h. ein in einem DRM-Container-Objekt CO vorgesehenes Nutzdatenobjekt NDO wird von der senderseitigen MMS-Vermittlungseinheit SMV an die empfängerseitige MMS-Vermittlungseinheit EMV übertragen (vgl. 1). Dabei wird davon ausgegangen, dass das verschlüsselte Nutzdatenobjekt zuvor beispielsweise von einem weiteren, der senderseitigen MMS-Vermittlungseinheit SMV zugeordneten Telekommunikationsendgerät (vgl. dazu beispielsweise das Telekommunikationsendgerät TG1 von Figur 1) mittels einer Multimedianachricht zur Weiterleitung an das Mobiltelefon TG2 zugesandt worden ist. In einer derartigen Multimedianachricht können jedoch auch mehrere (verschlüsselte bzw. DRM-geschützte Nutzdatenobjekte) enthalten sein.
2. Die MMS-Vermittlungseinheit EMV fragt in einer Datenbank DBE die Eigenschaften bzw. Möglichkeiten des Zielendgerätes TG2 mit der empfangenden MMS-Nutzerapplikation ENA ab (vgl. 2). Eine solche Datenbank kann an eine MMS-Vermittlungseinheit angegliedert sein oder als separate Komponente in einem Telekommunikationsnetz, das mit der MMS-Nutzerapplikation ENA verbunden ist, vorgesehen sein. Die MMS-Vermittlungseinheit kann darin individuell einem einzelnen MMS-Nutzer ein oder mehrere Datensätze für die vom Nutzer verwendeten Endgeräte anlegen. Besteht für die MMS-Vermittlungseinheit EMV eine Zugriffsmöglichkeit auf die im Mobilfunknetzwerk (des Telekommunikationsendgeräts bzw. Mobiltelefons TG2) bekannte Information, mit welchem Telekommunikationsendgerät sich ein Nutzer im Mobilfunknetzwerk eingebucht hat, kann die MMS-Vermittlungseinheit EMV aus der Datenbank DBE die entsprechenden Profilinformationen für das verwendete Endgerät abfragen. Voraussetzung dafür ist, dass für das aktuell verwendete Endgerät bereits ein Profil in der Datenbank abgespeichert wurde, d.h. dass die MMS-Vermittlungseinheit EMV bereits einmal mit der MMS-Nutzerapplikation ENA auf dem aktuell verwendeten Zielendgerät des Nutzers kommuniziert hat.
3. Alternativ zu der Abfrage unter 2. fragt die MMS-Vermittlungseinheit EMV direkt bei dem Zielendgerät TG2 die Eigenschaften ab (vgl. 3). Die MMS-Vermittlungseinheit EMV triggert dazu die MMS-Nutzerapplikation ENA auf dem Zielendgerät TG2, die Eigenschaften bzw. Möglichkeiten des Zielendgerätes TG2 in Form von Profilinformationen an die MMS-Vermittlungseinheit EMV zu übertragen. Der Trigger kann z.B. durch eine Push-Nachricht per WAP-Push erfolgen oder über eine speziell formatierte/codierte Kurznachricht im Kurznachrichtendienst bzw. "Short Message Service" SMS. Die Antwort kann z.B. per "http-Post-Request" erfolgen, wobei die Profilinformationen als Nutzdaten integriert werden, oder es wird ein "http-GET-Request" gesendet, der die Profilinformationen des Endgerätes in Form von "http-Accept-Kopffeldern" oder in Form eines "WAP-User-Agent-Profile" enthält. Die Antwort auf die Anfragen (Requests) kann entweder entfallen oder einen simplen Statuswert zum Zielendgerät TG2 zurückliefern. Die Adresse, an die eine solche Nachricht vom Zielendgerät TG2 an die MMS-Vermittlungseinheit EMV gesendet werden kann, wird in der ersten Trigger-Nachricht von der MMS-Vermittlungseinheit an das Zielendgerät TG2 gesendet. Da diese Funktionalität von sehr grundlegender Bedeutung auch für andere Dienste und Applikationen ist, kann die Kommunikation zwischen Zielendgerät und einer Einheit im Netzwerk auch anstatt von der MMS-Vermittlungseinheit von einer anderen Einheit im Netz erfolgen. Dies kann z.B. auch ein Proxy oder ein WAP-Push-Proxy-Gateway (PPG) sein. Nach Ermittlung der Eigenschaften des Zielgerätes kann die MMS-Vermittlungseinheit EMV die Eigenschaften des Zielendgerätes TG2 als Profil in der Datenbank DBE gemäß Punkt 2. abspeichern, um bei zukünftigen Transaktionen mit dem Zielendgerät die Informationen zur Verfügung zu haben, ohne wieder einen direkten Transfer der Informationen vom Zielendgerät TG2 zum Netzwerk initiieren zu müssen. Dadurch können Zeit, Übertragungskapazität und Kosten für den Nutzer gespart werden.
4. Basierend auf den unter den Punkten 2. bzw. 3. gewonnenen Information über die Eigenschaften des Zielendgerätes TG2 untersucht die MMS-Vermittlungseinheit EMV den Inhalt der an das Zielendgerät gerichteten Multimedianachricht (vgl. 4). Falls diese DRM-geschützte Nutzdatenobjekte enthält und darin wiederum die Referenz und Signalisierung für die Funktionalität gemäß der Erfindung zur Anpassung DRM-geschützter Inhalte an die Eigenschaften des Zielendgerätes enthalten sind, sendet die MMS-Vermittlungseinheit EMV eine Anfrage an die Datenbereitstellungskomponente DBK des Inhalteanbieters. Die Anfrage enthält entweder das DRM-Container-Objekt CO selbst oder eine Kennzeichnung für das DRM-Container-Objekt (z.B. eine Inhalts-URI) und zusätzlich die Beschreibung der Zielendgeräteeigenschaften. Die Datenbereitstellungskomponente DBK analysiert die Zielendgeräteeigenschaften, stellt fest, ob der aktuell in der Multimedianachricht enthaltene DRM-geschützte Inhalt NDO für das Zielendgerät geeignet ist, ob sie alternativ eine besser geeignete Variante bereitstellen kann oder ob eine geeignete Variante des DRM-geschützten Inhalts nicht bereitgestellt werden kann. Dem Ergebnis der Analyse entsprechend sendet die Datenbereitstellungskomponente DBK eine Antwortnachricht mit einer Information an die MMS-Vermittlungseinheit EMV, in der entweder die Eignung des bereits vorliegenden DRM-Container-Objekts bestätigt wird oder der DRM-geschützte Inhalt in besser geeigneter Form zur Verfügung gestellt wird oder mit einer Fehlermeldung signalisiert wird, dass weder der vorliegende DRM-geschützte Inhalt geeignet ist noch in alternativer, geeigneter Form zur Verfügung gestellt werden kann. Falls der DRM-geschützte Inhalt in besser geeigneter Form zur Verfügung gestellt werden soll, kann dies entweder durch direkte Integration in die Antwort von der Datenbereitstellungskomponente DBK an die MMS-Vermittlungseinheit EMV erfolgen, oder es wird nur eine Referenz bzw. ein Verweis in die Antwort integriert, über die/den die MMS-Vermittlungseinheit EMV eine separate Transaktion zum Abruf des DRM-geschützten Inhalts in geeigneter Form von der Datenbereitstellungskomponente DBK starten kann. Dies ist in Figur 2 als separates, gestricheltes Pfeilpaar mit der Bezeichnung "4a" dargestellt.
5. Nachdem das bzw. alle DRM-geschützten Objekte NDO in einer MM überprüft und gegebenenfalls ausgetauscht oder (aufgrund mangelnder Kompatibilität mit dem Zielendgerät) entfernt wurden, erfolgt die Zustellung der MM durch die MMS-Vermittlungseinheit auf herkömmliche Weise (vgl. 5). Zunächst wird zur MMS-Nutzerapplikation ENA eine Empfängerbenachrichtigung I über die Bereitstellung einer zu übertragenden Multimedianachricht mit enthaltenem Nutzdatenobjekt auf der MMS-Vermittlungseinheit EMV gesendet. Die MMS-Nutzerapplikation ENA antwortet in der dargestellten Variante mit einer Zustellanfrage II an die MMS-Vermittlungseinheit EMV, die wiederum die Multimedianachricht per MMS-Zustellnachricht III zustellt.
6. Die Multimedianachricht samt dem verschlüsselten bzw. DRM geschützten Nutzdatenobjekt NDO ist bei der MMS-Nutzerapplikation eingetroffen und kann genutzt werden. Für die Nutzung von DRM-geschützten Inhalten bzw. Nutzdatenobjekten ist eine DRM-Lizenz erforderlich, die als Rechteobjekt RO bezeichnet wird. Dieses liegt entweder bereits auf dem Zielendgerät TG2 vor oder wird gesondert für das/die DRM-geschützte(n) Objekte in der Multimedianachricht vom Zielendgerät TG2 heruntergeladen (vgl. 6). Anschließend kann der Inhalt bzw. das Nutzdatenobjekt auf dem Zielendgerät genutzt oder dargestellt werden, wobei die DRM-spezifischen Rechte und Einschränkungen berücksichtigt werden.

Im Ergebnis gewährleistet das Verfahren, dass die in einer Multimedianachricht enthaltenen Inhalte bzw. Nutzdatenobjekte - auch wenn sie DRM-Schutz unterliegen und ggf. verschlüsselt sind - nur in einer für das Zielendgerät geeigneten Form zu diesem übertragen werden. Es wird also die Übertragungskapazität von der MMS-Vermittlungseinheit EMV zur MMS-Nutzerapplikation ENA auf dem Endgerät optimal genutzt und es wird verhindert, dass der Benutzer des Zielendgeräts TG2 DRM-geschützte Objekte erhält, die er mit seinem Endgerät nicht nutzen kann.

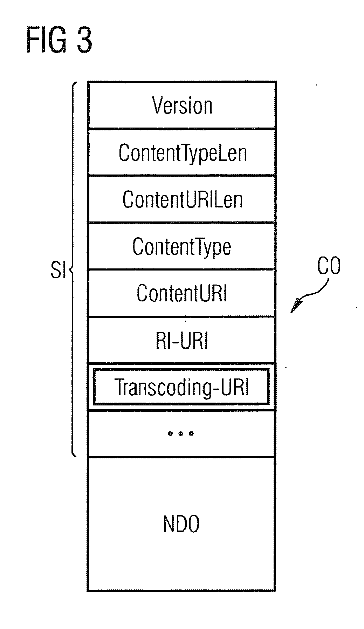

Die gesamte Funktionalität baut - wie oben bereits beschrieben - auf einem zusätzlichen Informationselement (Referenz) im verschlüsselten Nutzdatenobjekt bzw. im Container-Objekt CO für den DRM-geschützten Inhalt auf. Herkömmlicherweise ist ein mögliches Format für den Container in der Spezifikation "OMA-Download-DRMCF-vl_0 - DRM Content Format" beschrieben. Danach ist ein Container-Objekt für einen DRM-geschützten Content wie in Figur 3 dargestellt aufgebaut.

Grundsätzlich ist das Container-Objekt CO in 2 Bereiche aufgeteilt. Der erste enthält Steuerinformationen SI und Metadaten zum Inhalt des Containers, der zweite Bereich enthält den DRM-geschützten Inhalt NDO in verschlüsselter Form. Die Steuerinformationen SI umfassen die Version der Spezifikation, der der Container entspricht, Längenangaben über das Feld "ContentType" und "ContentURI", das Feld "ContentType", das den Typ und das Format des DRM-geschützten Inhalts im Container bezeichnet, das Feld "ContentURI", das einen eindeutigen Bezeichner für das vorliegenden Container-Objekt enthält und die "RI-URI", eine Referenz auf den Rechteanbieter, die von einem Endgerät genutzt wird, um neue Rechteobjekte (DRM-Lizenzen) herunterzuladen. Das entsprechend der Erfindung neue Element ist als "Transcoding-URI" bezeichnet und enthält eine Referenz auf eine Ressource, über die eine Transaktion gemäß obiger Beschreibung zu Schritt 4 erfolgen kann. Die Transaktion läuft dabei automatisiert ab und basiert auf definierten Anfragen und Reaktionen/Antworten mit definierten Statuscodes bzw. Fehlermeldungen. Weder auf der Seite des MMS-Vermittlungseinheit EMV noch auf der Seite der Datenbereitstellungskomponente DBK des Inhalteanbieters (Content-Providers) sind Eingriffe durch menschliche Bediener erforderlich. Es können weitere Informationen in zusätzlichen Kopffeldern folgen. Der 2. Teil des Containers enthält das Nutzdatenobjekt/den Inhalt in verschlüsselter Form.

Die Integration der neuen Signalisierungsinformation bzw. Referenz im Feld "Transcoding-URI" ist alternativ auch für andere Container-Formate für DRM-geschützte Inhalte möglich. Sie erfolgt bei zukünftig definierten Formaten analog. Bei einem einzelnen Nutzdatenobjekt in einem Container-Objekt reicht eine individuelle Signalisierungsinformation, bei mehreren objekten in einem DRM-Container-Objekt kann auch jedem Nutzdatenobjekt eine individuelle Signalisierungsinformation zugeordnet werden, um eine individuelle Überprüfung je Nutzdatenobjekt zu ermöglichen.

## Patentansprüche

1. Verfahren zum Übertragen von verschlüsselten Nutzdatenobjekten (NDO) an ein erstes Telekommunikationsendgerät (TG2), **dadurch gekennzeichnet, dass**
bei einer Vermittlungskomponente (VK; EMV) eines Telekommunikationsnetzes ein an das erste Telekommunikationsendgerät (TG2) zu übertragendes verschlüsseltes Nutzdatenobjekt (NDO) mit einer Referenz, Transcoding-URI, zur Überprüfung der Eignung des verschlüsselten Nutzdatenobjekts (NDO) für das erste Telekommunikationsendgerät (TG2) vorgesehen wird, wobei die Vermittlungskomponente (VK; EMV) aufgrund der Verschlüsselung keinen Zugriff auf den Inhalt des Nutzdatenobjektes (NDO) hat;
von der Vermittlungskomponente (VK) ein Profil bezüglich der Verarbeitungsmöglichkeiten von Nutzdatenobjekten (NDO) des ersten Telekommunikationsendgeräts (TG2) ermittelt wird;
von der Vermittlungskomponente (VK) eine Anfrage zusammen mit dem ermittelten Profil des ersten Telekommunikationsendgeräts (TG2) an eine Datenbereitstellungskomponente (DBK) entsprechend einer in der Referenz, Transcoding-URI, enthaltenen Adresse übermittelt wird, um zu prüfen, ob das zu übertragende Nutzdatenobjekt (NDO) von dem ersten Telekommunikationsendgerät (TG2) zur Verarbeitung geeignet ist;
von der Datenbereitstellungskomponente (DBK) eine Information über das Ergebnis der Prüfung der Eignung des zu übertragenden Nutzdatenobjekts (NDO) für das erste Telekommunikationsendgerät (TG2) an die Vermittlungskomponente (VK) übermittelt wird; und
von der Vermittlungskomponente (VK) ein verschlüsseltes Nutzdatenobjekt (NDO) entsprechend der Information über die Prüfung bereitgestellt und darüber das erste Telekommunikationsendgerät (TG2) benachrichtigt (I) wird.

2. Verfahren nach Anspruch 1, bei dem das verschlüsselte Nutzdatenobjekt (NDO) sowie die Referenz, Transcoding-URI, in einem Container-Objekt (CO) vorgesehen sind.

3. Verfahren nach Anspruch 1 oder 2, bei dem das zu übertragende verschlüsselte Nutzdatenobjekt (NDO) von einem zweiten Telekommunikationsendgerät (TG1) an die Vermittlungskomponente (VK) zur Weiterleitung an das erste Telekommunikationsendgerät (TG2) übertragen wird.

4. Verfahren nach einem der Ansprüche 1 bis 3, bei dem die Ermittlung des Profils bezüglich der Möglichkeiten des ersten Telekommunikationsendgeräts (TG2) durch Senden einer Abfrage an eine Datenbank (DBE) des Telekommunikationsnetzes erfolgt, in der die Endgeräteeigenschaften gespeichert sind.

5. Verfahren nach einem der Ansprüche 1 bis 3, bei dem die Ermittlung des Profils bezüglich der Möglichkeiten des ersten Telekommunikationsendgeräts (TG2) durch Senden einer Abfrage an das erste Telekommunikationsendgerät (TG2) selbst erfolgt.

6. Verfahren nach einem der Ansprüche 1 bis 5, bei dem die in der Referenz enthaltene Adresse eine URL umfasst.

7. Verfahren nach einem der Ansprüche 1 bis 6, bei dem in der Anfrage der Vermittlungskomponente (VK) an die Datenbereitstellungskomponente (DBK) ferner das zu übertragende verschlüsselte Nutzdatenobjekt (NDO) mit übermittelt wird.

8. Verfahren nach einem der Ansprüche 1 bis 7, bei dem bei negativem Ergebnis der Prüfung von der Datenbereitstellungskomponente (DBK) in der Information an die Vermittlungskomponente (VK) ein Verweis auf eine Datenbereitstellungskomponente enthalten ist, von der die Vermittlungskomponente (VK) ein entsprechend dem Profil des ersten Telekommunikationsendgeräts geeignetes (TG2) Nutzdatenobjekt (NDO) anfordern kann.

9. Verfahren nach einem der Ansprüche 1 bis 7, bei dem bei negativem Ergebnis der Prüfung von der Datenbereitstellungskomponente (DBK) in der Information an die Vermittlungskomponente (VK) ein geeignetes Nutzdatenobjekt (NDO) enthalten ist.

10. Verfahren nach einem Ansprüche 1 bis 9, bei dem das erste Telekommunikationsendgerät (TG2) auf die Benachrichtigung (I) der Vermittlungskomponente (VK) über das Bereitstellen eines geeigneten Nutzdatenobjekts (NDO) eine Anforderung (II) zum Zusenden des geeigneten verschlüsselten Nutzdatenobjekts (NDO) an die Vermittlungskomponente (VK) überträgt, welche daraufhin das geeignete verschlüsselte Nutzdatenobjekt (NDO) an das erste Telekommunikationsendgerät (TG2) sendet (III).

11. Verfahren nach einem der Ansprüche 1 bis 10, bei dem Daten zu und von dem ersten (TG2) und/oder zweiten (TG1) Telekommunikationsendgerät über eine Luftschnittstelle gesendet werden.

12. Verfahren nach Anspruch 11, bei dem das erste und/oder zweite Telekommunikationsendgerät (TG1, TG2) ein Funkmodul umfasst, und insbesondere als ein Mobiltelefon, ein Schnurlostelefon, oder ein tragbarer Computer ausgebildet ist.

13. Verfahren nach Anspruch 11 oder 12, bei dem die Übertragung von Nachrichten zu und von dem ersten und/oder zweiten Telekommunikationsendgerät (TG1, TG2) mittels WAP-Protokollen oder dem Hypertext Transfer Protocol, http, erfolgt.

14. Verfahren nach einem der Ansprüche 1 bis 13, bei dem das erste Telekommunikationsendgerät (TG2) Teil eines ersten Telekommunikationsnetzes ist.

15. Verfahren nach Anspruch 14, bei dem das erste Telekommunikationsnetz als ein Mobilfunknetz ausgeführt ist, das insbesondere nach dem GSM- oder UMTS-Standard arbeitet.

16. Verfahren nach einem der Ansprüche 14 oder 15, bei dem die Vermittlungskomponente (VK) als ein Teil eines zweiten mit dem ersten Telekommunikationsnetz verbundenen Telekommunikationsnetzes ausgebildet ist, das insbesondere als ein auf Internet-Protokollen, wie dem Hypertext Transfer Protocol, basiertes Telekommunikationsnetz ausgeführt ist.

17. Verfahren nach Anspruch 16, bei dem das erste und das zweite Telekommunikationsnetz durch eine Verbindungskomponente miteinander verbunden sind, welche insbesondere als ein WAP-Gateway ausgeführt ist.

18. Verfahren nach einem der Ansprüche 1 bis 17, bei dem dem ersten Telekommunikationsendgerät nach Erhalt des verschlüsselten Nutzdatenobjekt (NDO) ein Rechteobjekt (RO) übertragen wird, das den Schlüssel sowie die Benutzungsrechte für das zugeordnete Nutzdatenobjekt (NDO) enthält.

19. Verfahren nach einem der Ansprüche 1 bis 18, bei dem die Datenbereitstellungskomponente (DBK) als ein Server eines Inhalteanbieters ausgebildet ist.

20. Verfahren nach einem der Ansprüche 1 bis 19, bei dem das Nutzdatenobjekt (NDO) Textinformation, Audioinformation, Videoinformation, ein ausführbares Programm, ein Softwaremodul oder eine Kombination dieser Informationen enthält.

21. Telekommunikationsanordnung umfassend eine Vermittlungskomponente (VK), eine Datenbereitstellungskomponente (DBK), sowie zumindest ein erstes Telekommunikationsendgerät (TG2), wobei die Telekommunikationsanordnung über Mittel zum Durchführen eines Verfahrens nach einem der Ansprüche 1 bis 3, 5 bis 20 verfügt.

22. Telekommunikationsanordnung nach Anspruch 21
mit einer Datenbank (DBE), in der Endgeräteeigenschaften gespeichert sind
wobei die Telekommunikationsanordnung über Mittel zum Durchführen eines Verfahrens nach Anspruch 4 verfügt.

## Claims

1. Method for transmitting encrypted payload objects (NDO) to a first telecommunications terminal (TG2), **characterised in that**
in a switching component (VK; EMV) of a telecommunications network an encrypted payload object (NDO) that is to be transmitted to the first telecommunications terminal (TG2) is provided with a reference, (Transcoding-URI,) for the purpose of checking the suitability of the encrypted payload object (NDO) for the first telecommunications terminal (TG2), wherein the switching component (VK; EMV) has no access to the content of the payload object (NDO) on account of the encryption;
a profile relating to the options available to the first telecommunications terminal (TG2) for processing payload objects (NDO) is determined by the switching component (VK);
a request is transmitted by the switching component (VK) together with the determined profile of the first telecommunications terminal (TG2) to a data provisioning component (DBK) in accordance with an address contained in the reference, (Transcoding-URI,) in order to check whether the payload object (NDO) to be transmitted is suitable for processing by the first telecommunications terminal (TG2);
information relating to the result of the check on the suitability of the payload object (NDO) to be transmitted for the first telecommunications terminal (TG2) is transmitted to the switching component (VK) by the data provisioning component (DBK); and
an encrypted payload object (NDO) is provided by the switching component (VK) in accordance with the information relating to the check and the first telecommunications terminal (TG2) is notified (I) thereof.

2. Method according to claim 1, wherein the encrypted payload object (NDO) and the reference, (Transcoding-URI,) are provided in a container object (CO).

3. Method according to claim 1 or 2, wherein the encrypted payload object (NDO) to be transmitted is transmitted by a second telecommunications terminal (TG1) to the switching component (VK) for forwarding to the first telecommunications terminal (TG2).

4. Method according to one of claims 1 to 3, wherein the profile relating to the options available to the first telecommunications terminal (TG2) is determined by the sending of a query to a database (DBE) of the telecommunications network in which the terminal device characteristics are stored.

5. Method according to one of claims 1 to 3, wherein the profile relating to the options available to the first telecommunications terminal (TG2) is determined by the sending of a query to the first telecommunications terminal (TG2) itself.

6. Method according to one of claims 1 to 5, wherein the address contained in the reference includes a URL.

7. Method according to one of claims 1 to 6, wherein the encrypted payload object (NDO) to be transmitted is also transmitted in addition in the request of the switching component (VK) to the data provisioning component (DBK).

8. Method according to one of claims 1 to 7, wherein if the result of the check by the data provisioning component (DBK) is negative, the information to the switching component (VK) contains a pointer to a data provisioning component from which the switching component (VK) can request a suitable payload object (NDO) in accordance with the profile of the first telecommunications terminal (TG2).

9. Method according to one of claims 1 to 7, wherein if the result of the check by the data provisioning component (DBK) is negative, the information to the switching component (VK) contains a suitable payload object (NDO).

10. Method according to one of claims 1 to 9, wherein the first telecommunications terminal (TG2), in response to the notification (I) of the switching component (VK) concerning the provisioning of a suitable payload object (NDO), transmits a request (II) for the suitable encrypted payload object (NDO) to be sent to the switching component (VK), which thereupon sends (III) the suitable encrypted payload object (NDO) to the first telecommunications terminal (TG2).

11. Method according to one of claims 1 to 10, wherein data is sent to and from the first (TG2) and/or second (TG1) telecommunications terminal via an air interface.

12. Method according to claim 11, wherein the first and/or second telecommunications terminal (TG1, TG2) comprises a radio module and in particular is embodied as a mobile telephone, a cordless telephone or a portable computer.

13. Method according to claim 11 or 12, wherein messages are transmitted to and from the first and/or second telecommunications terminal (TG1, TG2) using WAP protocols or the Hypertext Transfer Protocol, http.

14. Method according to one of claims 1 to 13, wherein the first telecommunications terminal (TG2) is part of a first telecommunications network.

15. Method according to claim 14, wherein the first telecommunications network is implemented as a mobile radio network which operates in particular in accordance with the GSM or UMTS standard.

16. Method according to one of claims 14 or 15, wherein the switching component (VK) is embodied as part of a second telecommunications network which is connected to the first telecommunications network and is implemented in particular as a telecommunications network based on internet protocols such as the Hypertext Transfer Protocol.

17. Method according to claim 16, wherein the first and the second telecommunications network are connected to each other by means of a connection component which is implemented in particular as a WAP gateway.

18. Method according to one of claims 1 to 17, wherein following reception of the encrypted payload object (NDO) a rights object (RO) is transmitted to the first telecommunications terminal, which rights object contains the key and the usage rights for the assigned payload object (NDO).

19. Method according to one of claims 1 to 18, wherein the data provisioning component (DBK) is embodied as a server of a content provider.

20. Method according to one of claims 1 to 19, wherein the payload object (NDO) contains text information, audio information, video information, an executable program, a software module or a combination of this information.

21. Telecommunications arrangement comprising a switching component (VK), a data provisioning component (DBK) and at least one first telecommunications terminal (TG2), wherein the telecommunications arrangement possesses means for carrying out a method according to one of claims 1 to 3, 5 to 20.

22. Telecommunications arrangement according to claim 21, having a database (DBE) in which terminal device characteristics are stored,
wherein the telecommunications arrangement possesses means for carrying out a method according to claim 4.

## Revendications

1. Procédé pour la transmission d'objets de données utiles (NDO) cryptés à un premier terminal de télécommunication (TG2), **caractérisé en ce que**,
dans le cas d'un composant de commutation (VK ; EMV) d'un réseau de télécommunication, un objet de données utiles (NDO) crypté, à transmettre au premier terminal de télécommunication (TG2) est prévu avec une référence, (Transcoding-URI,) pour vérifier que l'objet de données utiles (NDO) crypté convient pour le premier terminal de télécommunication (TG2), le composant de commutation (VK ; EMV) n'ayant aucun accès au contenu de l'objet de données utiles (NDO) du fait du cryptage ;
un profil concernant les possibilités de traitement d'objets de données utiles (NDO) du premier terminal de télécommunication (TG2) étant déterminé par le composant de commutation (VK) ;
une demande étant transmise conjointement avec le profil déterminé du premier terminal de télécommunication (TG2) par le composant de commutation (VK) à un composant de mise à disposition de données (DBK) en fonction d'une adresse incluse dans la référence, (Transcoding-URI,) afin de vérifier si l'objet de données utiles (NDO) à transmettre du premier terminal de télécommunication (TG2) convient pour le traitement ;
une information concernant le résultat du contrôle destiné à savoir si l'objet de données utiles (NDO) à transmettre convient pour le premier terminal de télécommunication (TG2) est transmise par le composant de mise à disposition de données (DBK) au composant de commutation (VK) ; et
un objet de données utiles (NDO) crypté est mis à disposition par le composant de commutation (VK) en fonction de l'information concernant le contrôle et le premier terminal de télécommunication (TG2) en est informé (I).

2. Procédé selon la revendication 1, dans lequel l'objet de données utiles (NDO) crypté ainsi que la référence, (Transcoding-URI,) sont prévus dans un objet de conteneur (CO).

3. Procédé selon la revendication 1 ou 2, dans lequel l'objet de données utiles (NDO) crypté à transmettre est transmis d'un second terminal de communication (TG1) au composant de commutation (VK) pour la transmission au premier terminal de télécommunication (TG2).

4. Procédé selon l'une quelconque des revendications 1 à 3, dans lequel la détermination du profil concernant les possibilités du premier terminal de télécommunication (TG2) s'effectue pour l'envoi d'une demande à une banque de données (DBE) du réseau de télécommunication, dans laquelle les propriétés de terminaux sont stockées.

5. Procédé selon l'une quelconque des revendications 1 à 3, dans lequel la détermination du profil concernant les possibilités du premier terminal de télécommunication (TG2) s'effectue par l'envoi d'une interrogation au premier terminal de télécommunication (TG2) même.

6. Procédé selon l'une quelconque des revendications 1 à 5, dans lequel l'adresse contenue dans la référence comporte une URL.

7. Procédé selon l'une quelconque des revendications 1 à 6, dans lequel, dans la demande du composant de commutation (VK) destinée au composant de mise à disposition de données (DBK), l'objet de données utiles (NDO) crypté à transmettre est également transmis.

8. Procédé selon l'une quelconque des revendications 1 à 7, dans lequel, en cas de résultat négatif du contrôle du composant de mise à disposition de données (DBK), l'information destinée au composant de commutation (VK) contient un renvoi à un composant de mise à disposition de données auquel le composant de commutation (VK) peut demander un objet de données utiles (NDO) approprié (TG2) en fonction du profil du premier terminal de télécommunication.

9. Procédé selon l'une quelconque des revendications 1 à 7, dans lequel, en cas de résultat négatif du contrôle du composant de mise à disposition de données (DBK), l'information destinée au composant de commutation (VK) contient un objet de données utiles (NDO) approprié.

10. Procédé selon l'une quelconque des revendications 1 à 9, dans lequel le premier terminal de télécommunication (TG2) transmet, suite à l'information (I) du composant de commutation (VK) concernant la mise à disposition d'un objet de données utiles (NDO) approprié, une demande (II) concernant l'envoi de l'objet de données utiles (NDO) approprié et crypté au composant de commutation (VK), qui envoie ensuite l'objet de données utiles (NDO) approprié et crypté au premier terminal de télécommunication (TG2) (III).

11. Procédé selon l'une quelconque des revendications 1 à 10, dans lequel des données sont envoyées par une interface radio au premier ou à partir du premier (TG2) terminal de télécommunication et/ou au second ou à partir du second (TG1) terminal de télécommunication.

12. Procédé selon la revendication 11, dans lequel le premier et/ou le second terminal de télécommunication (TG1, TG2) comporte(nt) un module radio, et en particulier est/sont réalisé(s) sous la forme d'un téléphone mobile, d'un téléphone sans fil ou d'un ordinateur portable.

13. Procédé selon la revendication 11 ou 12, dans lequel la transmission de messages au premier ou à partir du premier et/ou au second ou à partir du second terminal de télécommunication (TG1, TG2) s'effectue au moyen de protocoles WAP ou du Hypertext Transfer Protocol, http.

14. Procédé selon l'une quelconque des revendications 1 à 13, dans lequel le premier terminal de télécommunication (TG2) fait partie d'un premier réseau de télécommunication.

15. Procédé selon la revendication 14, dans lequel le premier réseau de télécommunication est réalisé sous la forme d'un réseau de téléphonie mobile, qui travaille en particulier selon le standard GSM ou UMTS.

16. Procédé selon l'une quelconque des revendications 14 ou 15, dans lequel le composant de commutation (VK) est conçu comme une partie d'un second réseau de télécommunication relié au premier réseau de télécommunication, qui est réalisé en particulier sous la forme d'un réseau de télécommunication basé sur des protocoles Internet, comme le Hypertext Transfer Protocol.

17. Procédé selon la revendication 16, dans lequel le premier et le second réseau de télécommunication sont reliés l'un à l'autre par un composant de liaison, qui est réalisé en particulier sous la forme d'une passerelle WAP.

18. Procédé selon l'une quelconque des revendications 1 à 17, dans lequel un objet de droit (RO), qui contient le code ainsi que les droits d'utilisation pour l'objet de données utiles (NDO) attribué, est transmis au premier terminal de télécommunication après la réception de l'objet de données utiles (NDO) crypté.

19. Procédé selon l'une quelconque des revendications 1 à 18, dans lequel le composant de mise à disposition de données (DBK) est réalisé sous la forme d'un serveur d'un prestataire de contenus.

20. Procédé selon l'une quelconque des revendications 1 à 19, dans lequel l'objet de données utiles (NDO) contient de l'information de texte, de l'information audio, de l'information vidéo, un programme exécutable, un module de logiciel ou une combinaison de ces informations.

21. Dispositif de télécommunication comprenant un composant de commutation (VK), un composant de mise à dispositif de données (DBK), ainsi qu'au moins un premier terminal de communication (TG2), le dispositif de télécommunication disposant de moyens pour la mise en oeuvre d'un procédé selon l'une quelconque des revendications 1 à 3, 5 à 20.

22. Dispositif de télécommunication selon la revendication 21 avec une banque de données (DBE), dans laquelle sont stockées des propriétés de terminaux,
le dispositif de télécommunication disposant de moyens pour la mise en oeuvre d'un procédé selon la revendication 4.
